(19) **Europäisches Patentamt**

**European Patent Office**

**Office européen des brevets**

(11) **EP 1 022 824 A2**

(12) **EUROPEAN PATENT APPLICATION**

(43) Date of publication:
26.07.2000 Bulletin 2000/30

(51) Int. Cl.<sup>7</sup>: **H01S 3/098**, H01S 3/067

(21) Application number: 00300220.1

(22) Date of filing: **13.01.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **19.01.1999 US 233017**

(71) Applicant:
**LUCENT TECHNOLOGIES INC.**
**Murray Hill, New Jersey 07974-0636 (US)**

(72) Inventors:
• **Collings, Brandon Christopher**
**Plainsboro, New Jersey 08536 (US)**

• **Eggleton, Benjamin John**
**Summit, New Jersey 07901 (US)**
• **Greenberg Kosonski, Sandra**
**Murray Hill, New Jersey 07974 (US)**
• **Lenz, Gadi**
**Fanwood, New Jersey 07023 (US)**
• **Spalter, Stefan Heinz**
**Bridgewater, New Jersey 08807 (US)**

(74) Representative:
**Johnston, Kenneth Graham et al**
**Lucent Technologies (UK) Ltd,**
**5 Mornington Road**
**Woodford Green Essex, IG8 OTU (GB)**

(54) **Laser incorporating tunable grating for group velocity dispersion compensation**

(57) In accordance with the invention, a laser includes a tunable grating incorporated within the laser cavity. The grating is configured to provide GVD at wavelengths far from the photonic bandgap thus providing GVD compensation and management of intracavity dispersion. The grating is operated in the transmission mode and is configured so that reflection from within the photonic bandgap does not significantly affect the lasing condition. The grating is tunable, permitting adjustment of the intracavity GVD. In a preferred embodiment, the grating is an apodized fiber Bragg grating within the cavity of a modelocked fiber laser. The GVD of the fiber grating can be tuned by axial strain.

EP 1 022 824 A2

## Description

## Field of invention

This invention relates to lasers, and, in particular, to lasers which incorporate tunable gratings for controlling dispersion. An advantageous embodiment comprises a modelocked laser including within the laser cavity a tunable Bragg grating operating in the transmission mode.

## Background

Lasers are particularly attractive as sources of short pulses in optical communication systems. One common method for obtaining short pulses from a laser is to modelock the laser. See A. E. Siegman, Lasers (University Science Books, 1986). For generating very short pulses (<10ps) in a modelocked laser, it is important to control the group velocity dispersion (GVD) and nonlinearity within the laser cavity.

There are two distinct regimes of interest in a laser cavity: (a) the net normal GVD regime, and (b) the net anomalous GVD regime. In the normal regime, the total GVD in the cavity is positive ($\beta_2>0$), and the GVD and self-phase modulation (SPM) can act independently to broaden the pulse shape. In the anomalous regime, the total GVD in the cavity is negative ($\beta_2<0$) and the GVD and SPM can balance each other to form stable soliton pulses.

Operation in the anomalous GVD regime to form soliton pulses is often the preferred regime for generating short pulses. The soliton pulses are stable against small perturbations and are, to a very good approximation, transform limited pulses. Anomalous GVD control permits shaping of soliton pulses into subpicosecond pulses. Another advantage of anomalous GVD control arises from the fact that for solitons, the product of pulse energy and pulse width is constant and depends only on the GVD and nonlinearity. This phenomenon means that controlling the intracavity GVD permits controlling the pulsewidth for a given pulse energy. If the spectral width of the pulses is fixed by the gain bandwidth for a fixed negative cavity GVD, there is only one particular pulse energy for stable solitons. Thus tuning overall anomalous GVD over the stable operating region of the laser permits tuning the output pulse energy.

There are several schemes for the management of GVD. They include (i) using bulk optics, such as diffraction gratings or prism pairs or chirped mirrors (ii) using fibers of various different GVD magnitudes; and (iii) using chirped Bragg gratings operating in reflection. Unfortunately each of these methods has significant shortcomings.

GVD compensation using bulk optics has been demonstrated by a number of different authors. See, for example, R. L. Fork et al., Opt. Lett. 9, 150 (1984). But bulk optics typically introduce prohibitive insertion loss. They are also complex free space assemblies, which lack robustness and environmental stability.

GVD compensating fibers are attractive. Their insertion loss can be quite low, and they allow all-fiber cavities. See C. Lin et al., Opt. Lett. 5, 476-478 (1980). However, compensating fibers possess a constant GVD which is not easily adjusted. They can also introduce additional nonlinearity, owing to a reduced core diameter and large interaction length. Moreover for wavelengths below 1.3um, it is difficult to obtain commercial fibers with anomalous GVD ($\beta_2<0$). Furthermore compensating fibers are required to be long, resulting in a longer overall cavity length and a reduced repetition rate of the laser. High repetition rates can be obtained by harmonically modelocking the cavity, but harmonically modelocked lasers exhibit undesirable pulse-to-pulse timing jitter.

Chirped Bragg gratings in reflection can provide anomalous or normal GVD. See, for example, Fermann *et al*., "Environmetally stable...lasers that use chirped fiber Bragg gratings", 20 Optics Letters No. 20, p. 1625 (August 1995) and Galvanauskas *et al*. United States Patent No. 5,499,134 issued March 12, 1996. But the GVD compensation required in a laser is typically much smaller than can be practically provided by a chirped Bragg grating. Moreover, the use of chirped fiber reflection gratings requires a circulator which is undesirable. Circulators are lossy and can introduce birefringence.

In summary, there is a need for a transmissive device that can provide the necessary GVD to allow the generation of short pulses in lasers. The device should provide both signs of GVD at arbitrary wavelengths for enabling stable modelocked operation at any wavelengths. Furthermore it is desirable in a specific laser configuration that the element be tunable to allow the dynamic control of the pulse width and or the pulse energy.

## Summary of invention

In accordance with the invention, a laser includes a tunable grating incorporated within the laser cavity. The grating is configured to provide GVD at wavelengths far from the photonic bandgap thus providing GVD compensation and management of intracavity dispersion. The grating is operated in the transmission mode and is configured so that reflection from within the photonic bandgap does not significantly affect the lasing condition. The grating is tunable, permitting adjustment of the intracavity GVD. In a preferred embodiment, the grating is an apodized fiber Bragg grating within the cavity of a modelocked fiber laser. The GVD of the fiber grating can be tuned by axial strain.

## Brief Description of the Drawings

The advantages, nature and various additional features of the invention will appear more fully upon consideration of the illustrative embodiments now to be described in detail in connection with the accompanying drawings. In the drawings:

Fig. 1 is a first embodiment of a laser incorporating a tunable transmissive grating for GVD control;

Fig. 2 is an alternative embodiment of a laser with GVD control;

Figs. 3, 4 and 5 are diagrams useful in explaining the operation of the invention; and

Fig. 6 schematically illustrates a tunable transmission grating for use in the device of Fig. 1.

It is to be understood that these drawings are for purposes of illustrating the concepts of the invention and, except for the graphs, are not to scale.

## Detailed Description

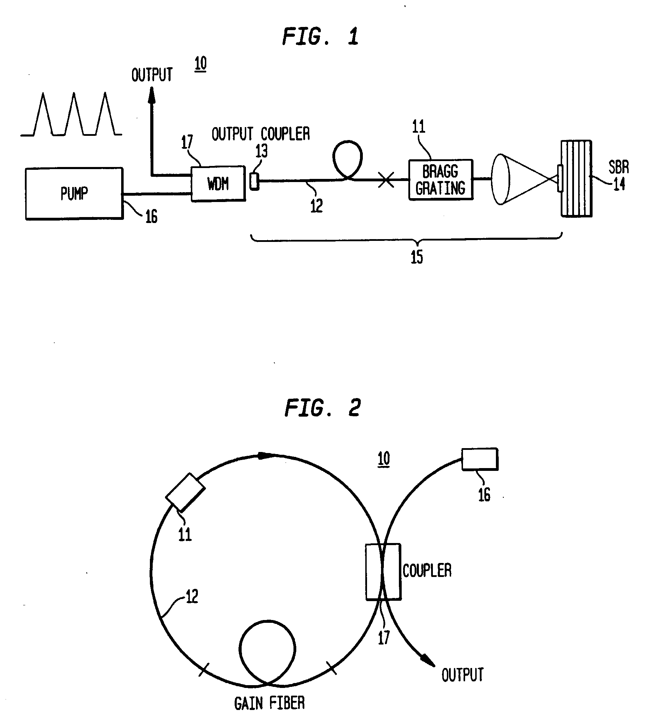

Referring to the drawings, Fig. 1 is a schematic diagram of a laser 10 incorporating within its cavity a tunable transmission grating 11 for controlling GVD compensation within the cavity. The laser 10 can be any conventional laser such as a linear cavity laser, a ring cavity laser or a fiber laser. The tunable transmission grating is a structure periodic in its optical properties with periodic spacing typically less than a wavelength of the transmitted signal. The grating can be periodic in 1, 2 or three dimensions. Typical gratings include photonic crystals, bulk Bragg gratings (thin film filters) and fiber gratings.

Laser 10 is advantageously a modelocked fiber laser comprising a length of optical fiber 12 incorporating an optical gain material such as a rare-earth dopant. The fiber is disposed between two high reflecting mirrors: a partially transmissive coupler mirror 13 -- which can be reflective fiber Bragg grating -- and a saturable Bragg reflector 14 for modelocking the laser. Mirrors 13 and 14 define the ends of the fiber cavity 15. Output can be taken from the cavity and pump light from an external pump source 16 can be introduced into the cavity via a wavelength division multiplexer 17.

The saturable Bragg reflector 14 can be the reflector for modelocking a laser described in United States Patent No. 5,627,854 issued to W.H. Knox on May 6, 1997. The Bragg reflector 14 comprises a semiconductor quarter wave stack reflector incorporating one or more quantum wells for providing an intensity dependent response.

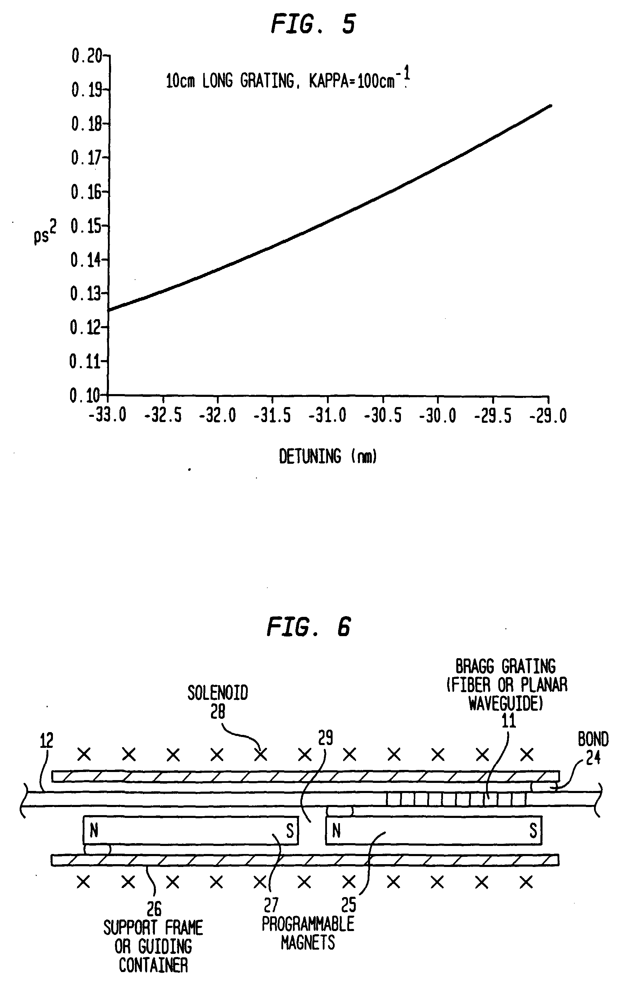

The tunable transmission grating 11 is advantageously an apodized fiber transmission grating tunable as by the application of axial strain to the fiber. That the fiber grating is apodized means that one or both of its ends is designed to minimize out-of-band reflection lobes. This impedance matches the grating to the surrounding medium. An exemplary arrangement for tuning the transmission grating 11 is described in detail below in connection with Fig. 6.

Fig. 2 illustrates an alternative embodiment of a fiber laser with GVD control wherein the laser cavity is a ring cavity 30 rather than a liner cavity. The ring cavity has the advantage that it does not require mirrors. Details concerning ring cavity designs are set forth in G.P. Agrawal, <u>Nonlinear Fiber Optics</u> (Academic Press, 1989).

The structure and operation of the invention can be better understood by considering the following specific example.

## Example 1

A tunable transmission grating is disposed in the cavity of a Yb doped fiber laser, which provides for optical gain from 1.01 to 1.17um. This wavelength region is of interest since it can be converted into 1.3um—1.5um region by nonlinearities of the optical fiber. Lasing at the Yb wavelength is valuable in generating broadband light for Raman amplification. The GVD at 1.0um is approximately $\beta_2 = +20 \text{ps}^2/\text{km}$. 5 m of gain fiber gives a total (single pass) GVD of around 0.1 $\text{ps}^2$. This amount of GVD can not be easily compensated by a fiber or chirped Bragg gratings since fibers with anomalous GVD at $1.0\mu\text{m}$ are not readily available, and the GVD of a chirped Bragg gratings is too large. GVD compensation can be achieved at these wavelengths by the tunable transmission grating.

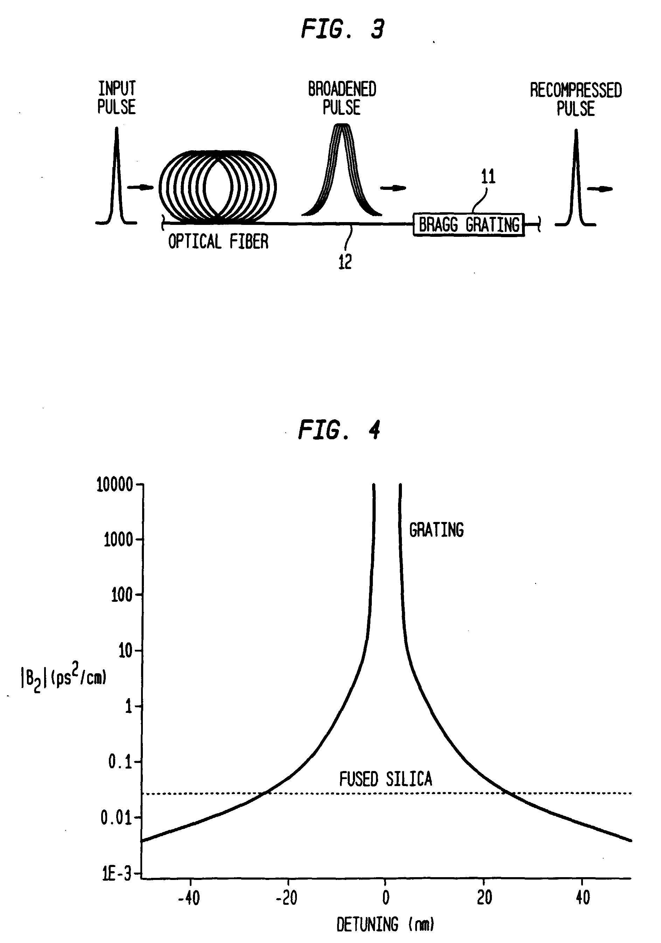

That the tunable transmission grating 11 can achieve GVD compensation in the above devices is readily demonstrable. GVD in a fiber grating in the transmission geometry has been studied theoretically and experimentally. See, for example, Eggleton *et al*. <u>Appl. Opt.</u>, Vol 37, 7055 (1998). Figure 3 schematically shows a transmission grating performing as a GVD compensator. Note that the pulse is broadened due to the GVD of the optical fiber and is subsequently compensated by transmission through the grating. The GVD of the grating in this example has opposite sign from the transmission fiber. The GVD of the grating is in the passband of the grating where the transmission is high. The grating can be apodized to reduce the undesirable sidelobes in the reflection spectrum ensuring the transmission approaches unity.

In a fiber grating the GVD bandwidth is usually of the order of the stopband of the grating. The limiting factor is the significant frequency dependence of the GVD close to the edges of the stopband. In the case of an apodized fiber grating, the GVD can be well approximated by,

$$\beta_2(\delta)=\left(\frac{n}{c}\right)^2 \frac{1}{\delta} \frac{(\kappa/\delta)^2}{[1-(\kappa/\delta)^2]^{3/2}} \qquad (1)$$

where $n$ is the refractive index, c is the speed of light, and $\kappa=\pi\Delta n\,\eta/\lambda_B$ is the coupling coefficient with $\Delta n$ the amplitude of the index modulation of the grating, $\eta$ the fraction of energy in the core and $\lambda_B$ is the Bragg wavelength. $\delta=(n/c)(\omega-\omega_B)$ is the detuning parameter where $\omega_B$ is the Bragg frequency: the wavelength detuning from the center of the stopband is then given by, $\Delta\lambda=-(\lambda_B^2/2\pi n)\delta$. Note that the sign of the GVD depends on the side of the stopband; in this case, we are interested in the frequency range above the photonic bandgap ($\delta>\kappa$) where the GVD is negative (anomalous GVD). The third order GVD can similarly be written,

$$\frac{d\beta_2}{d\delta}=\beta_3(\delta)=3\left(\frac{n}{c}\right)^3 \frac{1}{\delta^2} \frac{(\kappa/\delta)^2}{[1-(\kappa/\delta)^2]^{5/2}} \qquad (2)$$

which is the key parameter in ensuring efficient compression. The cubic dispersion ultimately limits the recompression factor. Third order dispersion results in asymmetry of the compressed pulse and energy in the trailing edge, which is clearly undesirable and thus limits the bandwidth ($\Delta\omega_S$) over which the GVD can be approximated as constant. We compare the relative importance of the second and third order dispersion term arriving at a figure of merit (M),

$$M = \frac{\beta_3 \Delta\omega_S}{\beta_2} = 3\Delta\omega_S \frac{n}{c} \frac{1}{|\delta|} \frac{1}{1-(\kappa/\delta)^2} \qquad (3)$$

The figure of merit thus dictates the bandwidth over which GVD compensation can typically occur and determines the stability of the laser. A reasonable figure of merit is M<1.

Returning to the modelocked Yb doped fiber laser. The GVD of the fiber at 1.0um is approximately $\beta_2=+20ps^2/km$. Assuming that 5-6 m of gain fiber is required this gives a total (single pass) GVD of around +0.1 ps$^2$. This amount of anomalous GVD can be very easy obtained in a Bragg grating operating in transmission. In this example we have used a 10cm long grating with a strength of $\kappa=100cm^{-1}$, typical of fiber gratings. Fig. 4 shows the calculated GVD of the grating (ps$^2$/cm) as well as the GVD of fused silica.

Fig. 5 is a graphical illustration which shows the GVD of the 10cm long grating versus detuning wavelength. The GVD is approximately 0.12—0.18ps$^2$. Note that the GVD is approximately constant over a bandwidth of approximately 1nm. The figure of merit is M<1 for this compensation configuration, which indicates the corresponding cubic GVD should not prevent the modelocking. One might expect for this example that the generated pulse would have a bandwidth of several nanometers corresponding to a pulse duration of less than a picosecond.

The grating and hence the GVD of the grating can be tuned by applying axial strain to the fiber. This is a well known technique used to shift the central wavelength of the grating and a variety of arrangements are known for applying axial strain. One advantage of this scheme is that strain tuning can be latched. Thus tuning of the grating does not require constant supply of power. Alternatively the grating can be temperature tuned. The GVD varies monotonically and continuously with frequency, and thus strain tuning of the stopband offers continuous tuning of the GVD of the grating and the total GVD of the laser cavity.

One limiting factor in the proposed configuration is that feedback provided by the grating reflection can force the laser to operate at an undesired wavelength. This limitation can be avoided by configuring the grating in such a way that the reflection band occurs at a wavelength where the gain of the fiber is low. Alternatively one can introduce an additional loss element to be coincident with the gratings central wavelength. Examples of such a loss elements include long-period fiber gratings or blazed Bragg gratings. Possibly one can use a blazed Bragg grating to provide the necessary dispersion and at the same time introduce loss.

The grating 11 can be written in the gain fiber itself, which is known to be photosensitive. This could be advantageous as it avoids the requirement for splicing and the associated insertion loss, and it results in an even shorter cavity length..

Fig. 6 schematically illustrates an exemplary arrangement for latchably tuning the transmission grating 11 by applying latchable axial strain. The grating 11 is secured, as by bonds 24 or mechanical attachment, between a mobile programmable magnet 25 and a guiding container 26 for transmitting magnetic force from the magnet to the grating. A fixed magnet 27 bonded to container 26 provides attractive force of varying magnitude to the mobile magnet depending on the applied pulse magnetic field. The mobile magnet 25 can have guided cylindrical shape, but non-round cross-sectional shapes are preferred in order to minimize fiber twisting during handling or service. One or more electromagnets (solenoids) 28 are disposed adjacent to the magnets 25, 27 for providing a sufficient magnetic field to change the remanent magnetization in them. The guiding container 26 is preferably a tube but can have other configurations such as a two-part assembly with u-shaped bottom and top pieces.

The guiding container 26 is typically a tube made of glass, quartz, metal or plastic. The grating 11 is attached to the mobile magnet 25 and the guiding container 26 either by mechanical clamping or by bonds 24, as with epoxy, low melting point glass, or solder. In the use of solder, the waveguide surface is desirably coated with a metal layer to improve solder bond strength. The mobile and the fixed magnets are aligned with a gap 29 between them.

The fixed magnet 27 is bonded onto the guiding container 26 as by epoxying, soldering, welding, or screws. To assure strong bonding and to minimize strain relaxation at the bond interface, the use of mechanically strong, non-thermoplastic adhesive, fusible glass adhesive, or a solder with a relatively high melting point, high mechanical strength and high creep resistance is desired. The waveguide surface to be attached is desirably coated with a metallization layer to improve the solder bond strength.

The preferred materials for the programmable magnets 25, 27 are those whose magnetic properties are modifiable by a pulse magnetic field. Some examples of suitable magnets are Fe-Cr-Co, Fe-Al-Ni-Co (Alnico), Cu-Ni-Fe (Cunife), Co-Fe-V (Vicalloy), specially-processed, low-coercivity ($H_c$) rare earth cobalt (Sm-Co) or Nd-Fe-B magnets, and Ba-ferrite or Sr-ferrite magnets. The desired range of the coercivity for the programmable magnet is typically below 500 Oe and preferably below 100 Oe for the ease of programming by re-magnetization using solenoid pulse field. The coercivity is typically above 10 Oe and preferably above 30 Oe for maintaining the stability of the remanent magnetization and also for stability against demagnetization due to stray magnetic fields. For satisfactory latchability of magnetization when the field is removed, the programmable magnet should have a square magnetization hysteresis loop with the squareness ratio (remanent magnetization/saturation magnetization) of at least 0.85, preferably at least 0.90, even more preferably at least 0.95. For ease of control, the loop is desirably skewed by at least 50% of $H_c$, for example, as described in US Patent application serial no. 09/020,206, filed by Espindola et al. on February 6, 1998, and entitled "Magnetically Reconfigurable Optical Grating Devices and Communication Systems" which is incorporated herein by reference. Mechanically ductile and easily formable or machineable magnet alloys such as Fe-Cr-Co, Cu-Ni-Fe, Co-Fe-V are particularly desirable for shaping into a desired configuration such as a rod. Stable permanent magnets with high coercive forces (e.g., $H_c$ > 1000 Oe), such as Sm-Co or Nd-Fe-B are less desirable (unless modified to exhibit lower coercive forces) because of the difficulty in reprogramming the remanent magnetization using desirably low magnetic field.

In operation, the mobile magnet 25 and the fixed magnet 27 are attracted to each other with a force that is determined by the remanent magnetization in them. The remnant magnetization in turn is controlled by the applied pulse field from the solenoid 28. The force transmitted from the magnet 25 to the grating 11 produces a strain which changes the GVD compensation by the grating. The force between two attracting magnets is approximately proportional to the square of the magnetic induction (M) multiplied by the cross-sectional area (A) of the magnets at the gap (F oc $M^2 \cdot A$).

Thus stronger magnets (higher M) or larger magnets (larger A) give stronger force. However, strong magnets with high coercivity are difficult to magnetically switch.

It is to be understood that the above-described embodiments are illustrative of only a few of the many possible specific embodiments which can represent applications of the principles of the invention. Numerous and varied other methods and arrangements can be made by those skilled in the art without departing from the spirit and scope of the invention.

## Claims

1. In a laser for generating optical pulses comprising an optical cavity, a laser gain medium disposed within the optical cavity and a source of laser pump light coupled into the cavity, said cavity subject to dispersion,

   the improvement wherein the laser includes within the optical cavity a tunable transmission grating for compensating the dispersion.

2. The improved laser of claim 1 wherein the laser comprises a modelocked laser.

3. The improved laser of claim 1 wherein the laser comprises an optical fiber laser.

4. The improved laser of claim 1 wherein the tunable Bragg grating comprises an optical fiber grating.

5. The improved laser of claim 1 wherein the tunable Bragg grating is an apodized Bragg grating.

6. The improved laser of claim 1 wherein the optical cavity is defined by a pair of reflecting mirrors.

7. The improved laser of claim 1 wherein the optical cavity comprises an optical ring cavity.

8. The improved laser of claim 1 wherein the laser comprises a rare-earth doped fiber laser and said tunable Bragg grating is an optical fiber Bragg grating.

9. The improved laser of claim 1 wherein the tunable Bragg grating comprises an optical fiber Bragg grating tuned by axial strain.

10. The improved laser of claim 1 wherein the tunable Bragg grating is latchably tunable.

## FIG. 1

## FIG. 2

## FIG. 3

INPUT
PULSE

BROADENED
PULSE

RECOMPRESSED
PULSE

11

OPTICAL FIBER

BRAGG GRATING

12

## FIG. 4

$|B_2|$ (ps$^2$/cm)

GRATING

FUSED SILICA

DETUNING (nm)

## FIG. 5

10cm LONG GRATING, KAPPA=100cm$^{-1}$

$ps^2$

DETUNING (nm)

## FIG. 6

SOLENOID
28

BRAGG GRATING
(FIBER OR PLANAR
WAVEGUIDE)
11

12    29    BOND
24

26
SUPPORT FRAME
OR GUIDING
CONTAINER

27    25
PROGRAMMABLE
MAGNETS